# FASCICULE DE BREVET EUROPEEN

(11) **EP 0 524 902 B1**
(45) Date de publication et mention de la délivrance du brevet: **27.03.1996**
(21) Numéro de dépôt: 92440088.0
(22) Date de dépôt: 24.07.1992
(51) Int. Cl.: A23G 3/30, A23G 7/00

(54) **Unité de détection-éjection pour pâte à mâcher en feuilles**
Vorrichtung zur Bestimmung und Auswurf von plattenförmigen Kaugummie
Slab chewing gum detection and ejection assembly

(30) Priorité: 26.07.1991 FR 9109705
(43) Date de publication de la demande: 27.01.1993
(73) Titulaire: Société TOGUM, F-67116 Reichstett (FR)
(72) Inventeur: Towae, Gérard, F-67000 Strasbourg (FR)
(74) Mandataire: Metz, Paul

(56) Documents cités:
- GB-A- 2 011 827
- US-A- 4 555 407
- US-A- 4 850 842
- CONFECTIONERY PRODUCTION. vol. 55, no. 7, Juillet 1989, SURBITON GB pages 483 - 484 'WLS Loser chewing gum lines'

## Description

On connaît par le brevet américain US n° 4,555,407 un procédé de fabrication de tablettes fines de chewing-gum calibrées dimensionnellement, c'est-à-dire prêtes à l'emballage, par une machine d'enveloppement automatique individuel.

Ce procédé met en oeuvre des moyens classiques de mélange, d'extrusion, de refroidissement et de laminage. On y précise des caractéristiques de composition, de température, dimensionnelles et de matériel de production comme un extrudeur bi-vis.

Ce brevet de procédé de fabrication s'intéresse également à la précision de l'épaisseur des tablettes et de la largeur. Pour ce faire, des moyens de laminage et de découpe de précision sont employés.

Il est question aussi de la récupération de la matière provenant de la découpe au niveau des bords.

On connaît par le brevet américain US n° 4,850,842 l'existence de détecteurs de présence de métal dans la pâte, disposés après des appareils de prédécoupe. On ne sait pas d'après ce brevet comment les parties contaminées sont évacuées dans une production continue.

La société allemande Walter LOSER présente dans l'édition de juillet 1989 du magazine "Confectionery production" une série d'extrudeurs et de laminoirs pour la production de chewing-gum et de pâte à mâcher. On y apprend l'existence d'un laminoir avec contrôle automatique de l'épaisseur par laser. Ce contrôle est effectué avec une chaîne de régulation et de maintien à une valeur de consigne.

La présente invention a pour but de réaliser automatiquement et à grande vitesse le contrôle continu avec évacuation des parties contaminées par des pièces métalliques, et le contrôle dimensionnel d'épaisseur et de découpe avec évacuation de la matière provenant de la découpe des bords.

La présente invention concerne une unité de détection-éjection en flux continu à grande vitesse pour produit en feuilles, notamment du type pâte à mâcher, par exemple chewing-gum.

De telles unités se composent d'un extrudeur de pâte délivrant un boudin de pâte transformé par un laminoir en un ruban continu à l'entrée d'une chaîne cinématique de conformation, de découpe et de triage, d'où sortent les produits finis sous forme de plaquettes calibrées.

Pour améliorer la productivité, on souhaite travailler à des vitesses de plus en plus élevées. Mais cet accroissement de vitesse s'accompagne d'une détérioration de la qualité, notamment du maintien de calibrage des plaquettes, de la contamination plus fréquente par des produits métalliques, et de la netteté des rives latérales après découpe.

Un premier but de l'invention consiste à contrôler dimensionnellement les produits en longueur, largeur, épaisseur et à éliminer les produits présentant des défauts d'aspect et des corps étrangers.

Un autre but de l'invention est de détecter puis d'éliminer les produits contaminés par des pièces métalliques, telles que des éléments de machines, de pièces ou de déchets métalliques divers, qui auraient pu être introduits ou arrachés accidentellement dans la chaîne cinématique en raison des vitesses de fonctionnement élevées.

Un autre but de l'invention est de gérer entièrement le fonctionnement de l'ensemble de l'unité par un automate programmable commandant une unité pneumatique en fonction des informations délivrées par des détecteurs sur la qualité des produits.

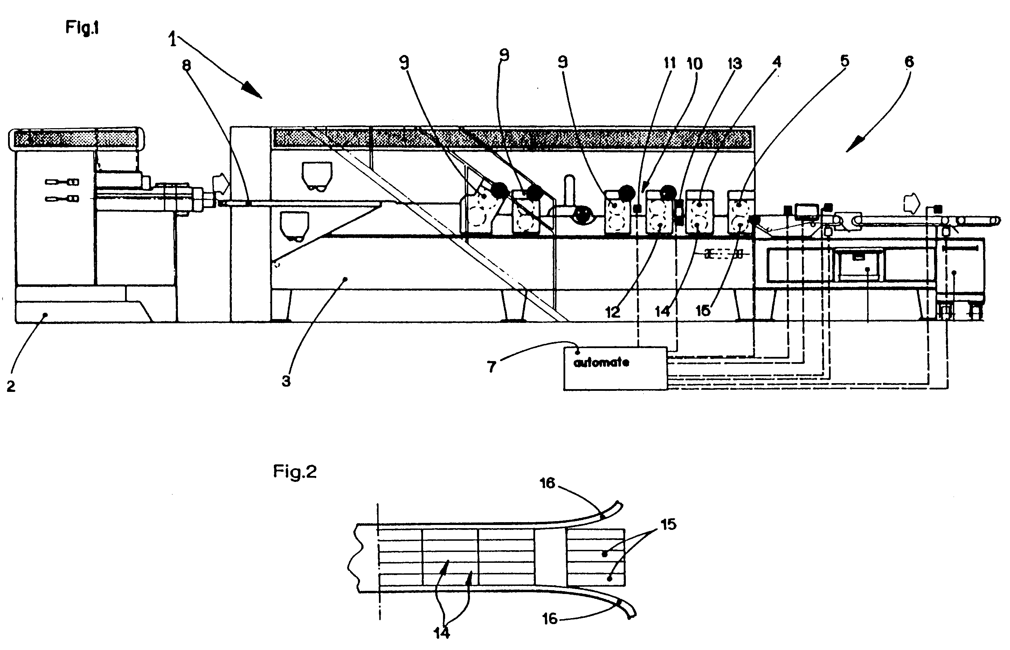

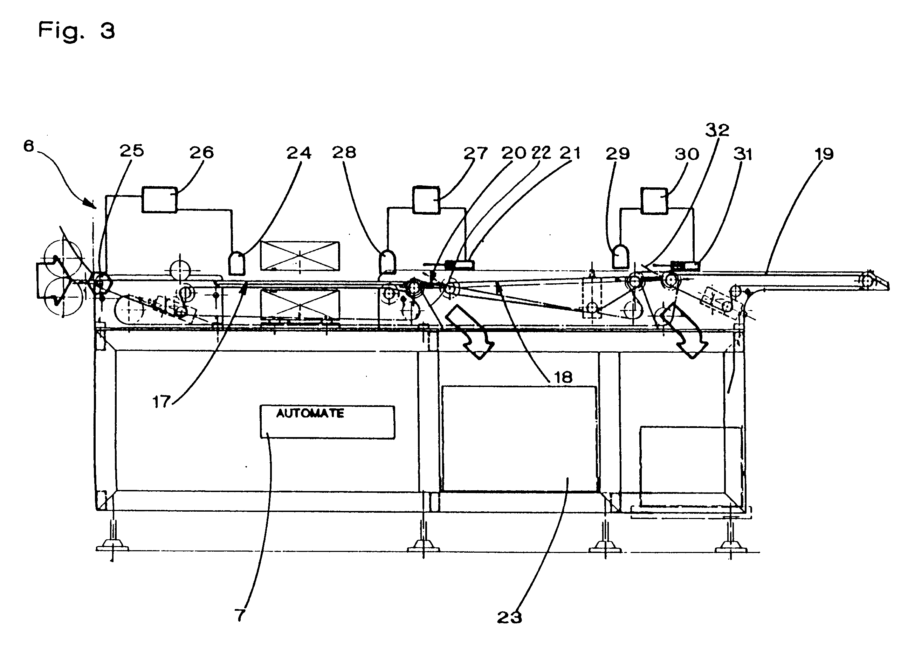

On comprendra mieux les buts et avantages de l'invention à l'aide de la description ci-après, faite en référence aux figures suivantes :
. la figure 1 est une vue schématique de profil d'une chaîne de production comprenant l'unité de détection-éjection conforme à l'invention ;
. la figure 2 est une vue en plan d'un groupe de plaquettes après les phases de découpe transversale et longitudinale ;
. la figure 3 est une vue schématique de profil de l'unité de détection-éjection conforme à l'invention.

La chaîne de production 1 comporte successivement un extrudeur 2, un laminoir 3, au moins un groupe de moyens de découpe transversale 4 et longitudinale 5, un ensemble de sortie-triage 6 avec contrôle dimensionnel et triage magnétique, et des composants électriques et électroniques gérés par un automate programmable 7.

L'extrudeur 2 est un matériel classique délivrant à grand débit un ruban de pâte 8 à l'entrée du laminoir 3. Ce dernier transforme le ruban 8 en une bande continue par passage entre des couples de rouleaux de laminage tels que 9, d'écartement de plus en plus réduit, jusqu'à obtention d'une plaque de pâte 10 de caractéristiques dimensionnelles prédéfinies.

La plaque de pâte 10 subit alors un contrôle de largeur au moyen d'un détecteur-codeur de largeur 11, puis un calibrage final au moyen d'un couple de rouleaux 12 de laminage-calibrage.

A ce stade, le produit se présente sous la forme d'une bande calibrée en largeur.

La bande subit ensuite un contrôle d'épaisseur par passage entre les deux cellules d'un détecteur laser 13, par exemple un détecteur du type "keyence", dont les cellules de détection sont placées au-dessus et en-dessous de la bande.

Puis, la bande de produit est découpée transversalement par le moyen de découpe transversale 4, afin de délivrer des rectangles 14 de pâte de longueur constante, qui sont alors repris pour être transformés en plaquettes 15 de largeur constante par les moyens de découpe longitudinale 5, par exemple des couteaux circulaires, dont l'écartement est réglé à la largeur des plaquettes à débiter.

La figure 2 montre, vues en plan, la plaque 10, la sortie d'un groupe de plaquettes 15 après découpe et la sortie des bandes latérales telles que 16, éliminées par tout moyen approprié d'une part pour défaut de largeur, d'autre part pour défaut de netteté des rives externes. Ainsi, il n'est pas nécessaire de tenir sensiblement compte de la position relative des rectangles 14 de pâte et des couteaux circulaires pour la découpe longitudinale en plaquettes 15.

Les groupes de plaquettes 15 sont ensuite traités dans l'ensemble de sortie-triage 6 qui comporte un transporteur composite à trois tapis successifs sans fin, un premier tapis ou tapis d'entrée 17, un tapis intermédiaire 18, et un troisième tapis ou tapis de sortie 19, séparés ou reliés sélectivement par une trappe d'évacuation 20 actionnée par un premier vérin d'éjection 21. La trappe 20 est réalisée, par exemple, sous la forme d'un volet basculant 22 qui, en position relevée, assure le passage d'un groupe de plaquettes d'un tapis au tapis suivant et, en position inclinée vers le bas, sert de trappe d'évacuation en provoquant la chute du groupe de plaquettes non conformes dans un bac de récupération 23.

A l'entrée de l'ensemble de sortie-triage 6 est disposé un moyen de contrôle de longueur des plaquettes composé par exemple, d'un détecteur d'arrivée 24, destiné à signaler le passage du front avant du groupe de plaquettes, associé à un codeur 25 relevant la position du front arrière du même groupe. Les deux informations sont envoyées à un calculateur 26 de longueur qui commande une électrovanne d'actionnement 27 du premier vérin d'éjection 21. Cette électrovanne donne l'ordre de basculement de la trappe d'éjection 20 dès qu'un détecteur de passage 28 placé à l'extrémité du tapis d'entrée 17 est sollicité, et juste avant que le produit non conforme parvienne au niveau de la trappe d'évacuation 20.

Les groupes de plaquettes sélectionnés passent alors sur le tapis intermédiaire 18 au bout duquel ils sont éjectés, si un détecteur de métal 29 placé sur le tapis d'entrée 17 a décelé l'arrivée d'un groupe de plaquettes contenant un corps étranger métallique, puis a commandé une deuxième électrovanne 30.

L'éjection s'effectue à l'aide d'un deuxième vérin d'éjection 31 commandant une deuxième trappe d'évacuation 32.

L'ensemble de sortie-triage 6 effectue ainsi deux sélections par élimination successive des produits hors normes dimensionnelles puis des produits chargés en métal.

Les produits issus de la double sélection sont conduits vers la sortie de l'ensemble de sortie-triage 6 par le troisième tapis ou tapis de sortie 19, d'où ils pourront ultérieurement être séparés et utilisés individuellement.

Les performances de l'unité décrite sont exceptionnelles :
. les plaquettes, après contrôle dimensionnel, constituent des produits exploitables à 100 % ;
. la vitesse du flux d'exécution est égale à 60 m/mn ;
. le débit des plaques est égal à 120 plaques/mn.

Il est bien entendu qu'au-delà des moyens décrits, diverses modifications évidentes et variantes simples entrent dans le cadre de la présente invention.

## Revendications

1. Unité de détection-éjection en flux continu à grande vitesse pour produit en feuilles, notamment de la pâte à chewing-gum, unité placée en aval d'une ligne de production comprenant un extrudeur (2), un groupe laminoir (3), l'extrudeur (2) délivrant à grand débit un ruban (8) de pâte à l'entrée du laminoir (3) formant une plaque de pâte (10) de caractéristiques dimensionnelles prédéfinies pour subir un contrôle de qualité en flux continu et à grande vitesse avant un calibrage final en épaisseur et en largeur, et comportant en combinaison des moyens de contrôle dimensionnel et de détection de présence de métal et des moyens de détection et d'éjection commandés par les moyens de contrôle successivement depuis la sortie du groupe laminoir (3) jusqu'à la sortie finale du produit contrôlé, combinaison formée par :
. un détecteur-codeur de largeur (11) de la bande (10) puis un moyen de calibrage final de la bande par un couple de rouleaux (12) de laminage-cabibrage placé en aval du laminoir (3) avec des moyens d'élimination des bandes latérales (16) ;
. un détecteur laser d'épaisseur (13) comprenant des cellules de détection placées au-dessus et en-dessous de la bande ;
. des moyens de découpe transversale (4) de la bande et des moyens de découpe longitudinale (5) par rapport à la plaque (10) ;
. un ensemble de sortie-triage (6) dont l'entrée est équipée, d'une part d'un moyen de contrôle de longueur des plaquettes avec détecteur de front avant (24) d'un groupe de plaquettes, et codeur de position arrière (25) du même groupe de plaquettes, et d'autre part d'un ensemble détecteur de métal (29), pour commander respectivement une trappe d'éjection (20) pour la chute des produits défectueux hors gabarit, et une trappe d'évacuation (32) pour l'évacuation des produits chargés en métal.

2. Unité de détection-éjection selon la revendication précédente, caractérisée en ce que l'ensemble de sortie-triage (6) comporte en outre un calculateur de longueur qui traite les informations données par le détecteur de front avant (24) et le codeur de position arrière (25) et qui commande, en combinaison avec le détecteur (24), une électrovanne (27) d'actionnement d'un vérin d'élection (21) de la trappe d'éjection (20) des produits hors gabarit après validation d'un deuxième détecteur de passage (28) placé à l'extrémité du tapis d'entrée (17).

3. Unité de détection-éjection selon l'une des revendications précédentes, caractérisée en ce que l'ensemble de sortie-triage (6) comporte en outre une électrovanne (30) d'actionnement d'un vérin d'éjection (31) d'une trappe (32) des produits chargés en métal, électrovanne (30) commandée en combinaison par le détecteur magnétique (29) et par le deuxième détecteur de passage (28).

4. Unité de détection-éjection selon l'une des revendications précédentes, caractérisée en ce que l'ensemble des composants électriques et électroniques de contrôle-triage sont gérés par un automate programmable (7).

## Claims

1. High-speed, continuous flow detection-ejection unit for a product in the form of leaves, in particular chewing-gum paste, which unit is placed downstream of a production line comprising an extruder (2), a rolling mill group (3), the extruder (2) delivering, at a high flow rate, a ribbon (8) of paste at the entry of the rolling mill (3), which ribbon forms a sheet of paste (10) of predetermined dimensional characteristics, to be subjected to quality control in continuous flow and at high speed, prior to final sizing of thickness and width, and comprising, in combination, means for monitoring the dimensions and for detecting the presence of metal and means for detection and ejection controlled by monitoring means in succession after the outlet of the rolling mill group (3) up to the final outlet of the monitored product, which combination is formed of:
. a detector-coder of the width (11) of the strip (10) followed by a means for final sizing of the strip by a pair of rolling-sizing rollers (12) located downstream of the roller (3) with means for eliminating lateral strips (16);
. a laser thickness detector (13) comprising detection cells located above and below the strip;
. means (4) for transverse cutting of the strip and means (5) for longitudinal cutting in relation to the plate (10);
. an output sorting assembly (6), the entry to which is provided, on the one hand, with a means for monitoring the length of the plates with a front face detector (24) for a group of small plates, and a rear position coder (25) for the same group of small plates, and, on the other hand, a metal detector assembly (29), to control, respectively, an ejection trap (20) for the ejection of defective products from the template, and an evacuation trap (32) for the evacuation of products charged with metal.

2. Detection-ejection unit according to the preceding Claim, characterised in that the outlet sorting assembly (6) furthermore comprises a length calculator which processes the information provided by the front face detector (24) and the rear position coder (25) and which controls, in combination with the detector (24), an solenoid valve (27) for actuating an ejection jack (21) of the trap (20) for ejecting the products from the template after validation of a second passage detector (28) located at the end of the inlet belt (17).

3. Detection-ejection unit according to one of the preceding Claims, characterised in that the outlet sorter assembly (6) comprises, furthermore, a solenoid valve (30) for actuating an ejection jack (31) of a trap (32) for products charged with metal, which solenoid valve (30) is controlled in combination by the magnetic detector (29) and the second passage detector (28).

4. Detection-ejection unit according to one of the preceding Claims, characterised in that the assembly of electrical and electronic components of the monitoring sorting are managed by a programmable automatic device (7).

## Patentansprüche

1. Einrichtung zum kontinuierlichen Erfassen und Auswerfen eines blattförmigen Erzeugnisses bei hoher Geschwindigkeit, insbesondere einer Kaugummigrundmasse, wobei die Einrichtung stromabwärts einer Produktionsstrecke mit einem Extruder (2) und einer Walzanlage (3) angeordnet ist und der Extruder (2) mit hoher Rate einen Streifen (8) der Grundmasse an den Eingang der Walzeinrichtung (3) liefert, die daraus eine plattenförmige Masse (10) vorbestimmter Maßeigenschaften bildet, um diese einer kontinuierlich ablaufenden Qualitätskontrolle bei hoher Geschwindigkeit vor einer endgültigen Maßgebung bezüglich Höhe und Länge zu unterziehen, und wobei die Produktionsstrecke eine Anordnung aus Einrichtungen zur Maßkontrolle und Metalldetektion sowie Detektions- und Auswurfeinrichtungen aufweist, die nacheinander durch die Steuereinrichtungen vom Ausgang der Walzeinrichtung (3) bis zur endgültigen Ausgabe des überprüften Erzeugnisses gesteuert werden, wobei die Anordnung
- eine Längen-Detektions/Codiervorrichtung (11) für den Streifen (10) aufweist, gefolgt von einer Einrichtung zur endgültigen Maßgebung des Streifens mittels eines zum Walzen und zur Maßgebung dienenden Rollenpaars (12), das stromabwärts der Walzvorrichtung (3) mit Einrichtungen zum Entfernen seitlicher Streifen (16) angeordnet ist;
- eine Laservorrichtung zur Höhenbestimmung (13) mit oberhalb und unterhalb des Streifens angeordneten Detektionszellen;
- Einrichtungen (4) zum Transversalschneiden des Streifens und Einrichtungen (5) zum Längsschneiden hinsichtlich der Platte (10); und
- eine Austrags-/Sortiereinrichtung (6), deren Einlaß einerseits mit einer Einrichtung zur Längsprüfung der Plättchen mittels eines Detektors (24) unmittelbar vor einer Anordnung von Plättchen und einem Codierer (25) in rückwärtiger Lage hinter derselben Anordnung von Plättchen und andererseits mit einer Metalldetektionseinrichtung (29) versehen ist, um jeweils eine Auswurfklappe (20) für den Verschnitt defekter Erzeugnisse außerhalb der Norm und eine Auswurfklappe (32) zum Entfernen Metall aufweisender Erzeugnisse zu steuern.

2. Einrichtung zur Detektion und zum Auswerfen nach dem vorhergehenden Anspruch, dadurch gekennzeichnet, daß die Austrags-/Sortiereinrichtung (6) überdies eine Längen-Recheneinheit aufweist, die die durch den Detektor (24) in vorderer Lage und den Codierer (25) in rückwärtiger Lage gegebenen Informationen verarbeitet und die gemeinsam mit dem Detektor (24) ein Magnetventil (27) steuert, das durch einen Auswurf-Stellzylinder (21) der Auswurfklappe (20) für außerhalb der Norm liegende Erzeugnisse nach Bestätigung durch einen zweiten Bahndetektor (28), der am Ende der Einlaßbahn (17) angeordnet ist, betätigt wird.

3. Einrichtung zur Detektion und zum Auswerfen nach einem der vorangehenden Ansprüche, dadurch gekennzeichnet, daß die Austrags-/Sortiereinrichtung (6) überdies ein Magnetventil (30) aufweist, das durch einen Auswurf-Stellzylinder (31) einer Klappe (32) für Metall enthaltende Erzeugnisse betätigt wird, wobei das Magnetventil (30) gemeinsam durch den Magnet-Detektor (29) und den zweiten Bahndetektor (28) gesteuert wird.

4. Einrichtung zur Detektion und zum Auswerfen nach einem der vorangehenden Ansprüche, dadurch gekennzeichnet, daß die Einheit aus elektrischen und elektronischen Komponenten zur Prüfung und Sortierung durch einen programmierbaren Automaten (7) gesteuert wird.
